# EUROPEAN PATENT APPLICATION

(11) **EP 0 537 477 A1**
(43) Date of publication of application: **21.04.1993**
(21) Application number: 92115487.8
(22) Date of filing: 10.09.1992
(51) Int. Cl.: A23L 1/164, A23L 1/2165

(54) **Process to fabricate pre-gelatinised grooved pellets of potatoes and/or cereals, and pre-gelatinised grooved pellets thus made**

(30) Priority: 14.10.1991 IT UD910167
(71) Applicant: PAVAN MAPIMPIANTI S.p.A., I-35015 Galliera Veneta (Padova) (IT)
(72) Inventor: Conselvan, Pierluigi, I-35030 Selvazzano (PD) (IT); Virtucio, Luisito, I-35015 Galliera Veneta (PD) (IT)
(74) Representative: Petraz, Gilberto Luigi

(57) **Abstract**

Process to fabricate pre- grooved pellets of potatoes and/or cereals, whereby a dough (23) which constitutes the pellet (32) undergoes possibly coinciding actions of gelatinization and extrusion, the paste of dough undergoing after extrusion steps (13-14) a rolling-grooving step (15) in which the profile and grooves of the pellets (32) may be of any shape, the paste of dough (27) being passed through a die (36) between the extrusion steps (13-14) and the rolling-grooving step (15).

Pre-gelatinized grooved pellets of potatoes and/or cereals, which have any form and outer profile, the pre-gelatinized (32) pellets, before a severing step, undergoing in sequence steps of extrusion (13-14), being passed through a die (36) and rolling-grooving (15).

## Description

This invention concerns a process to fabricate pre-gelatinised grooved pellets of potatoes and/or cereals, as set forth in the main claim.

The invention concerns also pre-gelatinised grooved pellets of potatoes and/or cereals made with this fabrication process as set forth in the main claim, the pellets having a normal or low content of protein.

Both the outer profile and the grooves of the pellets may be of any shape.

The process according to the invention is properly applied to the field of the foodstuffs industry.

The state of the art includes processes to fabricate pre-gelatinised extruded pellets having a smooth profile; these processes consist essentially in moistening a flour, kneading the same and thereafter extruding and simultaneously cooking it, forming it by means of a die and then drying the product.

To be more exact, the extruding step consists in passing the dough through a cooker extruder and then through a forming extruder.

In fact, the dough is passed first through a cooker extruder, whence the product emerges in pieces having an irregular shape, these extruded pieces being then conveyed to a mixing vessel of the forming extruder.

The pieces are generally cooled in this mixing vessel before being kneaded again and extruded at temperatures normally below 50°C through dies which may have very sophisticated shapes.

This second extrusion pass in the cold state is not required for some types of snacks having a simple shape such as square or rectangular chips or square or round sticks.

The dough consists of the following raw materials used individually or mixed together: corn, rice, wheat, potatoes, starches, whether pre-gelatinised or modified.

The present applicants are not aware of pre-gelatinised products having a grooved profile, nor of processes to fabricate pre-gelatinised products with a grooved profile.

The teaching of US-A-3,845,232 deals with small balls and cylinders which are rolled and then expanded and do not entail the typical problems of the products with which this invention is concerned.

US-A-3,873,748 deals with a product having a high protein content, that is to say, a product unlike that with which this invention is concerned. It is known that products with a high protein content involve great problems of expansion.

The book edited by R.B. Fast, "Breakfast Cereals and how they are made", 1990 - American Association of Cereal Chemists Inc. - St. Paul, Minnesota, U.S.A., speaks on page 118 of grooved rolls, but only for the purpose of regulating the feed and not for the shaping of the product

The present applicants have studied, tested and achieved this invention so as to avoid the shortcomings of the state of the art and to make these pre-gelatinised grooved products.

This invention is set forth and characterized in the main claims, while the dependent claims describe variants of the idea of the main solution.

The process according to the invention consists in introducing in an intermediate stage of the production cycle of the state of the art a step of rolling-grooving the paste or dough.

The rolling-grooving step according to the invention is carried out by using a pair of appropriately shaped contrarotating rolls.

According to a variant the rolling-grooving step is carried out by means of a grooving die.

According to yet another variant the rolling-grooving is carried out together with the step of forming the paste.

Both the outer profile and the grooves of the pellets may be of any shape.

Where the rolling-grooving is carried out with contrarotating shaped rolls, these rolls may be fed in one of the following ways:
- with a paste arriving from a die located at the outlet of a forming extruder fed by a cooker extruder;
- with a paste arriving from a die located at the outlet of a cooker extruder;
- with a paste arriving from a forming extruder fed with a dough consisting of a more or less gelatinized product;
- with a dough consisting of a more or less gelatinized product arriving from a cooker extruder, the dough being fed to the shaped rolls by means of the installation of a hopper directly above those rolls.

The paste having a grooved profile imparted by the shaped rolls follows the known cycle of the smooth pastes and in particular the forming by severing of the paste and the successive drying step.

As in the known method of fabrication of smooth paste, in this case too the excess waste created by means of the forming and severing mould is recovered and returned to the cycle in the cooker extruder, forming extruder or hopper, depending on the fabrication cycle.

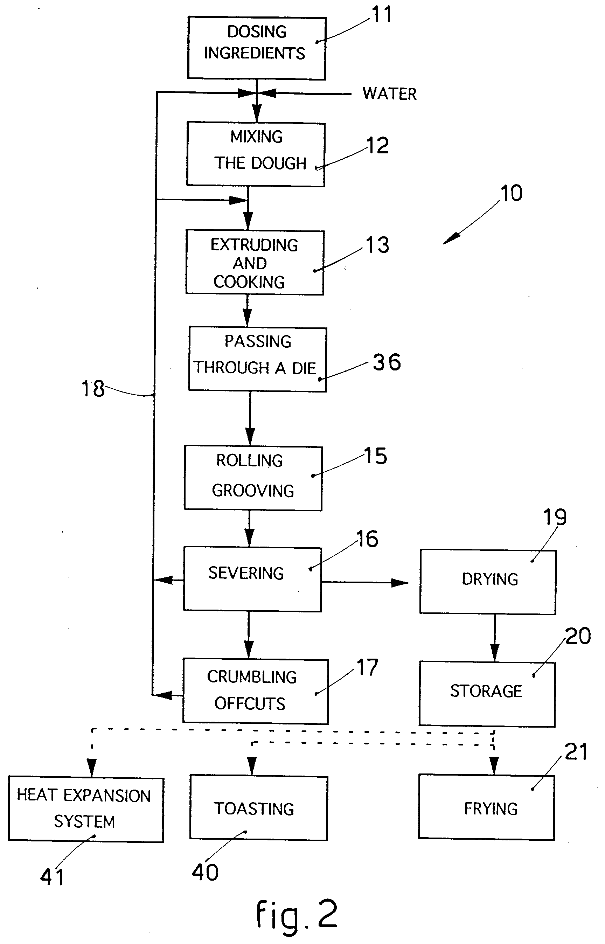

The attached diagrams, which are given as a non-restrictive example, show some preferred solutions of the invention as follows:-
- Figs.1 to 4: show block diagrams of four possible cycles of the process to fabricate pre-gelatinised grooved pellets according to the invention;
- Fig.5: is a diagram of a plant to produce grooved pellets according to the cycle of Fig.1.

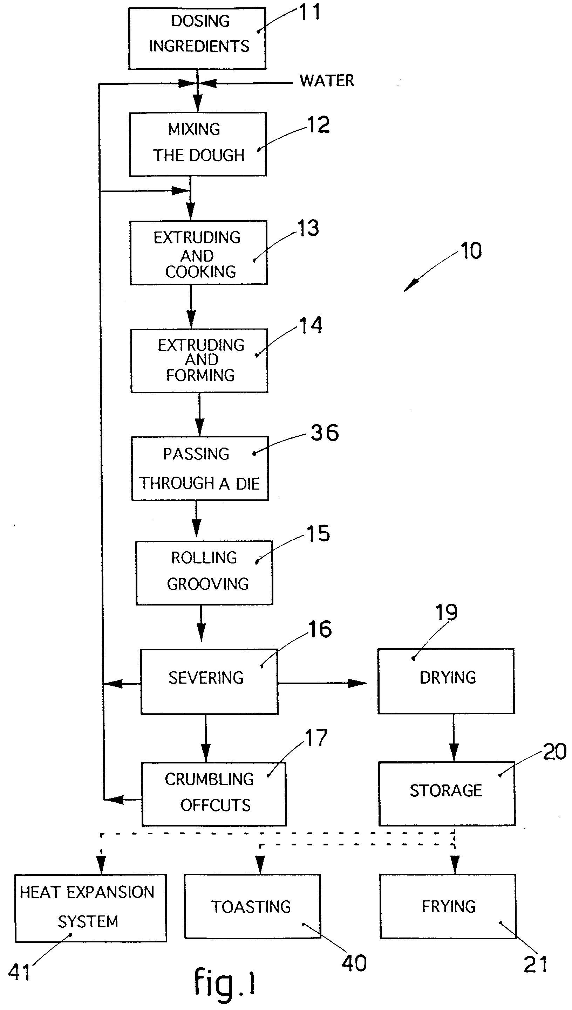

A process 10 to fabricate pre-gelatinised grooved pellets of potatoes and/or cereals according to the invention comprises the following steps (see Fig. 1):
11 - dosing the flours;
12 - mixing with water and forming a dough;
13 - extruding-cooking the dough as to make a pre-gelatinised paste;
14 - extruding-forming the pre-gelatinised product;
36 - passing the pre-gelatinised product through a die;
15 - rolling-grooving the pre-gelatinised paste with contrarotating shaped rolls, that is to say, a step in which the pre-gelatinised paste is grooved by imparting to it the lengthwise and/or crosswise grooves required;
16 - forming the pre-gelatinised paste by severing with a mould;
17 - crumbling any offcuts of excess waste product;
18 - recirculating any crumbled offcuts;
19 - drying the pre-gelatinised pellets;
20 - possible storage of the pre-gelatinised pellets;
21 - frying, possibly at a later date, the pre-gelatinised pellets.

As an alternative to the frying step 21 one or another of the following steps may be included:
40 - toasting the pre-gelatinised pellets;
41 - heat treatment of the pre-gelatinised pellets for their expansion.

Fig .2 shows an alternative process 10 to fabricate pre-gelatinised grooved pellets. This process does not require the extruding-forming step 14 for the paste but instead requires cooling in the last stage of a cooker extruder 25.

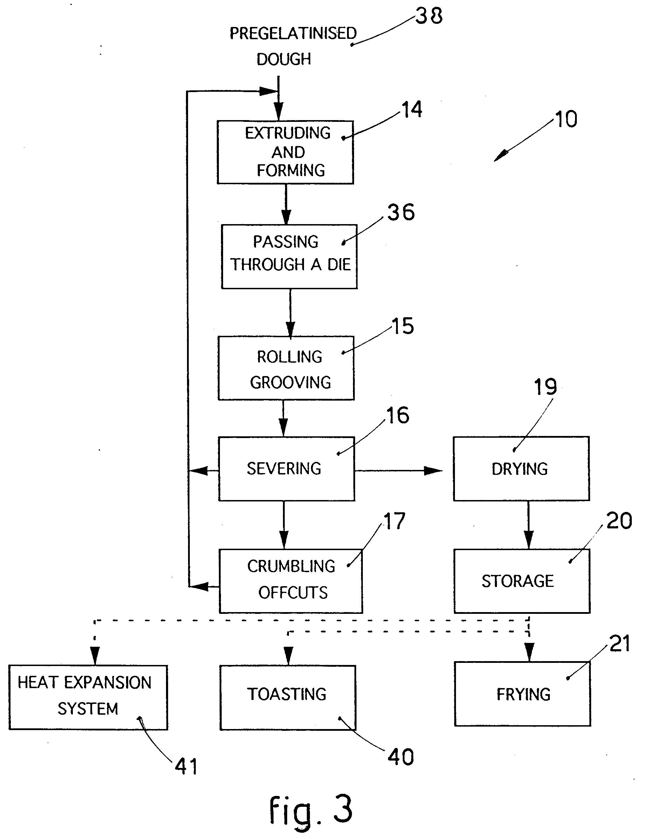

Fig.3 shows another form of preferred realization of the process 10 according to the invention, whereby the paste fed to the rolling-grooving step 15 comes from a forming extruder 26 fed with a more or less gelatinized dough 38.

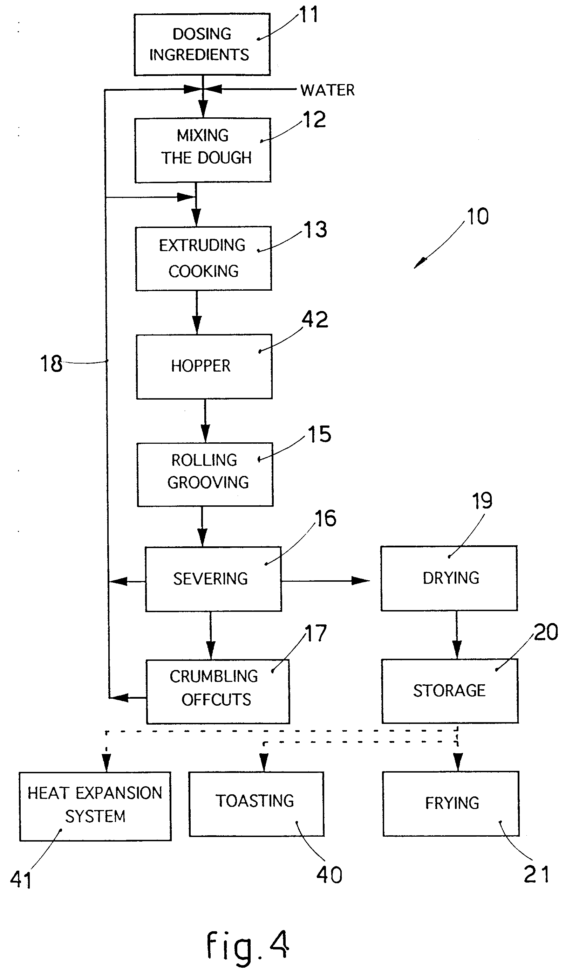

Fig.4 shows still another form of preferred realization of the process 10 according to the invention, whereby a more or less gelatinized dough 38 of product coming from the cooker extruder 25 is discharged into a hopper 42 which feeds grooved rolls 28a-28b.

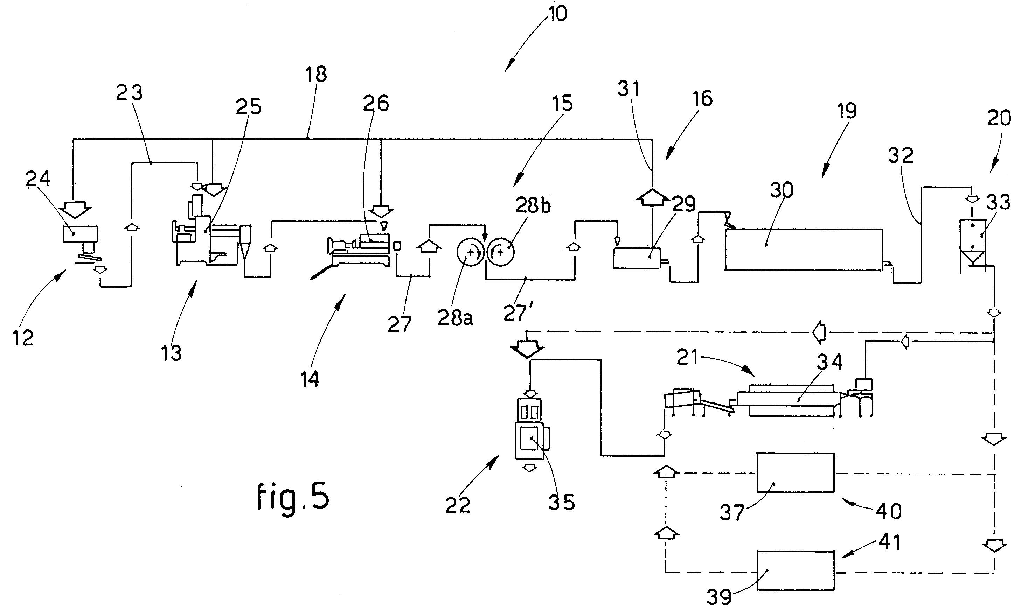

In Fig.5 a dough 23 coming from a mixer 24 is sent to the cooker extruder 25 and thence to the forming extruder 26.

The pre-gelatinised smooth paste 27 thus formed is rolled again by the pair of contrarotating grooved rolls 28a-28b, which impart to the paste 27 the required outer grooves.

The pre-gelatinised grooved paste 27' is then moulded and severed to the desired shape (oval, round, shaped, square, etc.) by a severing device 29 and is then fed into a drier 30.

Offcuts 31 of excess paste leaving the severing device 29 are recycled in the mixer 24 or in the cooker extruder 25 or the forming extruder 26.

The pre-gelatinised grooved pellets 32 are delivered into storage silos 33, in which they can be kept even for a long time.

The pre-gelatinised grooved pellets 32 are sent from the storage silos 33 to a fryer 34 and thence to a packaging machine 35.

According to a variant the pre-gelatinised grooved pellets 32 are delivered to a toaster 37.

According to another variant the pre-gelatinised grooved pellets 32 are sent to any heat treatment 38 for expansion.

According to a further variant the pre-gelatinised grooved pellets 32 are fed directly to the packaging machine 35 to be sold pre-gelatinised and fried or toasted or expanded in another manner at their place of sale.

## Claims

1. Process to fabricate pre-gelatinised grooved pellets of potatoes and/or cereals, whereby a dough (23) which constitutes the pellet (32) undergoes possibly coinciding actions of gelatinization and extrusion, the process being characterized in that the paste of dough undergoes after extrusion steps (13-14) a rolling-grooving step (15) in which the profile and grooves of the pellets (32) may be of any shape, and in that the paste of dough (27) is passed through a die (36) between the extrusion steps (13-14) and the rolling-grooving step (15).

2. Process as claimed in Claim 1 , in which the d dough (38) arrives at the rolling-grooving step (15) directly from the mixing (24) hopper (42).

3. Pre-gelatinized grooved pellets of potatoes and/or cereals, which have any form and outer profile, the pre-gelatinized (32) pellets being characterized in that, before a severing step, they undergo in sequence steps of extrusion (13-14), being passed through a die (36) and rolling-grooving (15).
